# EUROPÄISCHE PATENTSCHRIFT

(11) **EP 1 644 097 B1**
(45) Veröffentlichungstag und Bekanntmachung des Hinweises auf die Patenterteilung: **17.02.2010**
(21) Anmeldenummer: 04763150.2
(22) Anmeldetag: 09.07.2004
(51) Int. Cl.: B01D 25/28

(54) **VERFAHREN ZUM FILTRIEREN VON FLUIDEN**
METHOD FOR FILTERING FLUIDS
PROCEDE POUR FILTRER DES FLUIDES

(30) Priorität: 11.07.2003 DE 10331383
(43) Veröffentlichungstag der Anmeldung: 12.04.2006
(73) Patentinhaber: E. Begerow GmbH & Co., D-55450 Langenlonsheim (DE)
(72) Erfinder: PFEIFFER, Werner, 55452 Guldental (DE)
(74) Vertreter: Bartels & Partner
(86) Internationale Anmeldenummer: PCT/EP2004/007579
(87) Internationale Veröffentlichungsnummer: WO 2005/007266

(56) Entgegenhaltungen:
- WO-A-01/62482
- DE-A- 2 933 034
- US-A- 4 722 789

## Beschreibung

Die Erfindung betrifft ein Verfahren zum Filtrieren von Fluiden gemäß der Merkmalsausgestaltung des Oberbegriffes des Patentanspruches 1.

Durch die EP 1 140 317 B1 ist eine Vorrichtung bekannt, die ebenfalls dem kontinuierlichen Filtrieren von Flüssigkeiten mittels eines Druckgefälles dient zwischen einem Einlauf und einem Auslauf der Vorrichtung sowie zum Auspressen restlicher Unfiltratmengen mittels eines pneumatischen Druckmediums vor dem Öffnen der Vorrichtung mit
- einer Mehrzahl von Filterplatten in der Art eines Filterrahmens ausgebildet, die beidseitig eine Vertiefung zur Aufnahme eines flächigen Filtermediums aufweisen und mit Ablaufkanälen für das Filtrat ausgestattet sind,
- einer Mehrzahl von Membranplatten, die ebenfalls in der Art eines Filterrahmens ausgebildet Anschlüsse, Bohrungen und Ausnehmungen für die Zufuhr des Druckmediums aufweisen und beidseitig mit einer elastischen Membran belegt sind, wobei zwischen Filtermedium und Membran ein Unfiltrat- bzw. Filterkuchenraum gebildet ist, wobei die unter Druckbeaufschlagung bis zur flächigen Anlage an den Filterplatten bzw, dem Schichtfiltermaterial elastisch dehnbaren Membranen beidseitig eine glatte Oberfläche aufweisen und in entspanntem Zustand vollflächig an der Membranplatte anliegen,
- zwischen den Membranplatten und den Filterplatten den Unfiltratraum begrenzenden Rahmen,
- korrespondierenden Ausnehmungen in den Filter- und Membranplatten, die in montiertem Zustand mindestens je einen Zulaufkanal für das Unfiltrat und einen Ablaufkanal für das Filtrat bilden sowie mit
- Endplatten, Halterungs- und Spanneinrichtungen, um die Filterplatten und Membranplatten als Filterrahmen zu einem Paket lösbar miteinander zu verbinden.

Diese bekannte Filtervorrichtung zählt hinsichtlich ihres konstruktiven Aufbaus zu den sog. Filterpressen, die jedoch beim Filtrierverfahren wie ein Plattenfilter benutzt wird, bei dem das Filtrat durch das Flüssigkeits-Druckgefälle zwischen Einlauf und Auslauf durch das Filtermedium hindurchgedrückt wird. Als Filtermedium setzt die bekannte Lösung Abschnitte eines Schichtfiltermaterials ein, das charakterisiert ist durch ein labyrinthartig strukturiertes Tiefenfiltergefüge, das gegebenenfalls in Verbindung mit unterschiedlichen Oberflächenladungen eine sowohl mechanisch als auch adsorptiv beeinflußte Abscheidung von Partikeln auf dem relativ langen Weg durch das Filtermedium ermöglicht. Diese auch als Filterschichten bezeichneten Schichtenfiltermaterialien sind Spezialpappen zur Filtration fluider Medien mit dem Ziel, grobe bis feinste Partikel, Kolloide, Mikroorganismen und andere unerwünschte Bestandteile abzutrennen, um ein Filtrat in gewünschter hoher Qualität zu erhalten, bzw. feste Rückstände als Filterkuchen zu gewinnen.

Obwohl mit der bekannten Vorrichtungs- und Verfahrenslösung sehr gute Abscheideresultate erreichbar sind, läßt sie dennoch Wünsche offen, insbesondere wenn es darum geht, Feinstteile, wie Albumin, Globulin, Eiweißstoffe od. dgl. aus einem Blut-Plasma-Fluid abzutrennen oder die bekannte Vorrichtungs- und Verfahrenslösung für die Blut-Plasma-Fraktionierung einzusetzen. Auch können im Filterkuchen trotz des Auspressens mittels den Membranen der einzelnen Membranplatten innerhalb der Filtervorrichtung Wirkstoffe im Filterkuchen verbleiben, die dann für weiterverarbeitende Prozesse verloren gehen, was insbesondere für sehr teure Wirkstoffprodukte, wie Albumin, Globulin und/oder sonstige spezielle Eiweißstoffe auf der Kostenseite zu Verlusten führt.

Eine vergleichbare Lösung ist auch in der WO 01/62482 A1 aufgezeigt. Die bekannte Lösung offenbart eine Filterpresse unter anderem bestehend aus:
- einem Eingang und einem Ausgang und
- in axialer Richtung abwechselnd aufeinander folgenden, beidseits mit Filtertuch überzogenen Filterplatten und aus beidseits jeweils mit Membranen und Filtertüchern überzogenen Membranfilterplatten; sowie
- einem Unfiltratraum oder Filterkuchenraurn, zwischen den Filterplatten und Membranfilterplatten, zur Aufnahme eines sich bildenden Filterkuchens eingesetzt, und beidseits durch ein Filtermedium begrenzt sind.

Durch die EP 0 759 318 A1 ist ein Verfahren sowie eine Vorrichtung bekannt, die dem Entfeuchten und Trocknen von Feststoff/Flüssigkeits-Gemischen dienen, bei dem die zu behandelnde Trübe in einer Filterpresse entfeuchtet und der gebildete Filterkuchen durch Wärmezufuhr getrocknet wird, wobei der bei der Entwässerung gebildete Filterkuchen beidseitig gegen jeweils zwischen zwei Filterplatten und parallel zu diesen angeordnete Heizplatten gedrückt wird, die auf eine konstante Trocknungstemperatur aufgeheizt werden. Das Andrücken des Filterkuchens an die Oberflächen der Heizplatten erfolgt mittels eines unter Druck stehenden Gases, das über ein Sammelrohr und eine Drainage zugeführt wird, wobei nach dem Aufheizen des Filterkuchens auf eine vorgegebene Temperatur die Zufuhr des unter Druck stehenden Gases abgestellt und ein unter niedrigem Druck stehendes Spülgas in die Filterpresse eingeleitet und über die Drainage und das Sammelrohr abgeführt wird. Die Umstellung von Druckgas (Aufheizphase) auf Spülgas (Verdampfungsphase) und umgekehrt wird wiederholt, bis der gewünschte Trocknungsgrad des Kuchens erreicht ist, worauf der getrocknete Filterkuchen durch Öffnen der Filterpresse in üblicher Weise entfernt wird.

Bei der bekannten Lösung begrenzen also immer zwei Filtermedien einen Sammelraum, in dem der Heizstab geführt ist, und mit der bekannten Lösung ist es zum einen möglich, über die beiden Filtermedien gemeinsam zu filtrieren und diese gemeinsam mit einer Waschflüssigkeit (unter Druck stehendes Gas), zugeführt über einen Trübezulauf, zu spülen. Auch bei der dahingehenden Ausgestaltung ist nicht auszuschließen, dass Wirkstoffe, insbesondere im Mittenbereich des Filterkuchens verbleiben und derart für weitergehende Verarbeitungsprozesse verloren gehen.

Durch die Fig.5 nebst zugehörigen Textstellen der US-A-4 722 789 ist eine Vorrichtung zum Durchführen eines gattungsgemäßen Verfahrens bekannt zum Filtrieren von Fluiden, wobei ein Eingang für das Unfiltrat und ein Ausgang für das Filtrat sowie eine Mehrzahl an stapelbaren Rahmenteilen vorgesehen werden, insbesondere in Form von Filtratplatten und von Filterrahmen, wobei der jeweilige Filterrahmen einen Unfiltratraum zur Aufnahme eines sich bildenden Filterkuchens begrenzt, der auf seiner einen, dem nächsten Rahmenteil im Stapel zugewandten Seite von einem Schichtfilter abgeschlossen wird, wobei der Unfiltratraum mit dem aufnehmbaren Filterkuchen auf seiner, dem Schichtfilter gegenüberliegenden Seite von einem weiteren Filtermedium begrenzt wird, und wobei durch dieses weitere Filtermedium ein weiteres Fluid in Form einer Waschflüssigkeit zugeführt wird, die nach Durchströmen des jeweils abgeschiedenen Filterkuchens auf jeder Seite des eingesetzten Filtermediums einer Filtratplatte die Vorrichtung über den Filtratraum verläßt. Die bekannte Lösung dient dem Abscheiden einer breiigen Masse (Pulp) aus dem zugeführten Fluidstrom, die sich als Filterkuchen auf dem jeweiligen Filtermedium absetzt und mittels der Waschflüssigkeit von Verunreinigungen abreinigbar ist. Eine im jeweiligen Unfiltratraum angeordnete Rotormessereinrichtung ist in der Lage, bei entsprechend geöffneter Stapelanordnung des Stapelfilters in drehender Weise den jeweils abgeschiedenen Filterkuchen von dem Filtermedium abzuschaben, um dergestalt das Pulpmaterial als Endprodukt des Verfahrens zu erhalten.

Ausgehend von diesem Stand der Technik liegt der Erfindung die Aufgabe zugrunde, die bekannten Lösungen dahingehend weiter zu verbessern, dass möglichst wenig Wirkstoffe im Filterkuchen verbleiben und derart nicht für weitergehende Verarbeitungsprozesse verloren gehen, um dergestalt die Kosteneffizienz eines Filtrationsvorganges, bezogen auf Feinstabscheideprozesse, zu erhöhen. Eine dahingehende Aufgabe löst ein Verfahren mit den Merkmalen des Patentanspruches 1.
Dadurch, dass gemäß dem kennzeichnenden Teil des Patentanspruches 1 die durch das weitere Filtermedium zugeführte Waschflüssigkeit nach Durchströmen des Filterkuchens und des angrenzenden Schichtfilters die Vorrichtung über ihren Ausgang derart verläßt, dass im Rahmen einer Blutplasma-Fraktionierung Feinststoffe, wie Eiweißstoffe, Albumin, Globulin, aus dem Fluid herausfiltriert werden, können über eine geeignete Waschflüssigkeit, die in Abhängigkeit der Filtrationsaufgabe von ihren Inhaltsstoffen her varriieren kann, etwaig im Filterkuchen verbleibende Wert- und Wirkstoffe dergestalt ausgewaschen und über den Schichtfilter der Filtratseite der Vorrichtung zugeführt werden, dass sie für weitere Verarbeitungs- und Aufbereitungsvorgänge zur Verfügung stehen. Dadurch, dass im Gegensatz zu der nächstkommenden bekannten Lösung (US-A-4 722 789) das Zuführen der Waschflüssigkeit über ein Filtermedium erfolgt, dann den im Sammelraum befindlichen Filterkuchen vollständig durchströmt und erst dann anschließend über das weitere Filtermedium, das den Sammelraum gleichfalls begrenzt, abgeführt wird, ist sichergestellt, dass die teuren Filtratprodukte, wie Eiweißstoffe, Albumin, Globulin etc., wie sie als Endprodukte im Rahmen der Blutplasma-Fraktionierung erwünscht sind, aus der Vorrichtung auf der Filtratseite auslaßseitig herausgeführt werden. Insoweit ist die Filtrationsleistung mit der erfindungsgemäßen Verfahrenslösung gegenüber den bekannten Lösungen erhöht und durch den Erhalt der genannten weiteren Wirkstoffe ist die Kosteneffizienz für die einzelnen Filtrationsprozesse deutlich gesteigert.

Durch Einsatz der Waschflüssigkeit, die dergestalt über ein Filtermedium geführt wird, bevor sie in den Filterkuchen eintritt, ist darüber hinaus ein besonders schonender Trennvorgang der Wirkstoffe vom sonstigen Filtratkuchen erreicht, was insbesondere dann eine Rolle spielt, wenn die Wirkstoffe gegen mechanische Belastungen, beispielsweise in Form des Druckes der Membran einer Membranplatte od. dgl., empfindlich sind. Für selektive Wirkstoffabscheideprozesse mittels der Waschflüssigkeit ist es somit möglich, durch den Einsatz des Schichtfilters auf der einen Seite des Filterkuchens und durch den Einsatz eines weiteren Filtermediums auf der gegenüberliegenden Seite des Filterkuchens mit entsprechender Durchströmung der Filterschichten und des kompletten Filterkuchens mittels der Waschflüssigkeit auf mechanische Auspreßverfahren für den Filterkuchen vollständig zu verzichten und dennoch zu guten Abscheideraten an Wirkstoff zu gelangen.

Für das Durchführen des beschriebenen Verfahrens dient eine Vorrichtung, bei der der Schichtfilter aus einem Tiefenfiltermedium gebildet ist und das weitere Filtermedium wird aus einem Filtertuch oder gleichfalls aus einem Tiefenfiltermedium gebildet. Durch die geeignete Wahl an Filtertüchern und/oder Tiefenfiltermaterialien läßt sich dergestalt die Selektivität für die abzuscheidenden Feinststoffe vorgeben.

Bei einer weiteren bevorzugten Ausführungsform des erfindungsgemäßen Verfahrens wird auf das weitere Filtermedium derart eine Druckkraft ausgeübt, dass der FiIterkuchen in Richtung des SchichtfiIters gepreßt ist. Vorzugsweise dient dabei zum Ausüben der Druckkraft auf das weitere Filtermedium eine mit einem Druckmedium, insbesondere in Form von Gas, beaufschlagbare Membran, die Bestandteil einer Membranplatte als weiteres Rahmenteil der Vorrichtung ist, mit der sich das erfindungsgemäße Verfahren durchführen läßt. Insbesondere bei Feinststoffen, die weniger gegen mechanische Druckbeanspruchung empfindlich sind, läßt sich dann dergestalt der Erhalt an Abscheideprodukten erhöhen, indem der Filtratkuchen nicht nur gewaschen, sondern mit einem Preßdruck versehen zusammengedrückt wird. Auf diese Art und Weise läßt sich deutlich der Erhalt an Wirkstoffen auf der Filtratseite während des Filtrationsprozesses erhöhen. In Abhängigkeit der gewählten Lösung besteht dabei die Möglichkeit, zuerst den Filterkuchen zusammenzupressen und dann zu waschen; die dahingehenden Prozesse in umgekehrter Reihenfolge durchzuführen oder gleichzeitig zu waschen und den Filterkuchen dabei zu pressen, wobei die Waschflüssigkeit von einem Filter zum benachbarten nächsten in einer homogenen, gleichförmigen Strömung die Abreinigung vornimmt.

Bei einer weiteren besonders bevorzugten Ausführungsform des erfindungsgemäßen Verfahrens werden der Schichtfilter und das weitere Filtermedium zwischen die plattenartigen Rahmenteile eingespannt, wobei diese die Unfiltrat- und Filtratkanäle, die an Ein- bzw. Ausgang der Vorrichtung angeschlossen werden, überdecken. Auf diese Art und Weise lassen sich stabil die jeweiligen Filterschichten und Filtermedien zwischen den Rahmenteilen verspannen und dergestalt innerhalb der Vorrichtung festlegen. Demgemäß ist es nicht notwendig, wie im Stand der Technik beschrieben (EP 1 140 317 B1), das Filtermedium in Vertiefungen der jeweiligen Filterplatte einzulegen, um dann die Abschnitte an Schichtfiltermaterial randseitig zwischen den Filterplatten und den Rahmen abdichtend zusammenzudrücken, was zu kompliziert aufbauenden Rahmenteilen und mithin zu einer Erhöhung der Herstellkosten der Vorrichtung führt.

Im folgenden wird das erfindungsgemäße Verfahren anhand einer Vorrichtung sowie verschiedener Ausführungsbeispiele gemäß der Zeichnung näher erläutert. Dabei zeigen in prinzipieller und nicht maßstäblicher Darstellung die
- Fig.1: eine perspektivische Darstellung einer Stirnseite der Vorrichtung;
- Fig.2, 2a und 2b: Querschnitte durch einen Teil des Stapelpaketes an Rahmenteilen sowie eine stirnseitige Draufsicht auf ein Rahmenteil;
- Fig.3, 3a: wiederum einen Querschnitt durch die stapelartig gepackten Rahmenteile eines zweiten Ausführungsbeispiels sowie eine stirnseitige Ansicht auf ein dahingehendes Rahmenteil;
- Fig.4,4a: einen Querschnitt durch die stapelartig gepackten Rahmenteile eines dritten Ausführungsbeispieles sowie eine stirnseitige Ansicht auf ein dahingehendes Rahmenteil.

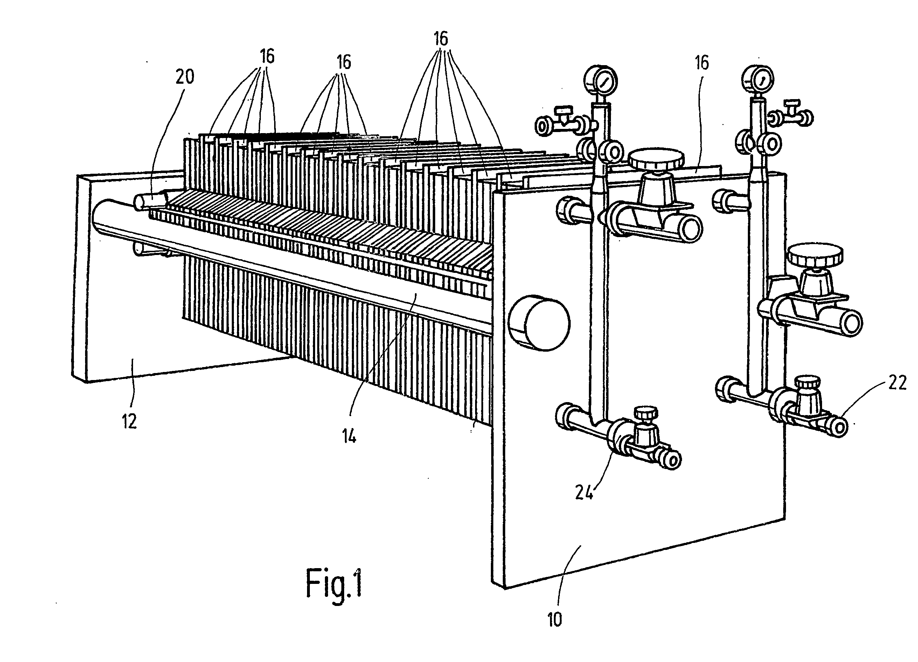

Die in der Fig.1 perspektivisch dargestellte Filtervorrichtung verfügt über eine vordere und hintere Gestellplatte 10 bzw. 12. Die beiden Gestellplatten 10,12 sind in einer horizontalen Ebene über einen balkenartigen Auflagerahmen 14 aneinandergehalten. Auf den Auflagerahmen 14 lassen sich von oben her Rahmenteile 16 mit an ihnen angeformten Auflagenasen 18 einstapeln und in pressende Anlage miteinander bringen. Damit die einzelnen Rahmenteile 16 in ihrer Lage am Auflagerahmen 14 gehalten sind, wirkt an einem Ende der Vorrichtung eine nicht näher dargestellte Preßeinrichtung 20 auf diese und hält die plattenartigen Rahmenteile 16 aneinander. An der vorderen Gestellplatte 10 ist des weiteren anschlußartig ein Eingang 22 für die Zufuhr des Unfiltrats sowie ein Ausgang 24 für die Abfuhr des Filtrats angeordnet. Der Aufbau einer dahingehenden Filtervorrichtung ist üblich und in einer Vielzahl von Bau- und Ausführungsformen im Stand der Technik nachweisbar, so dass an dieser Stelle hierauf nicht mehr näher eingegangen wird. Des weiteren kann die in Fig.1 dargestellte Vorrichtung nicht näher spezifizierte weitere Anschlüsse (nicht näher dargestellt) aufweisen für Druckmedienzuführung, Waschflüssigkeit sowie gegebenenfalls weitere Kanäle und Anschlußstellen für Filtrat und Unfiltrat.

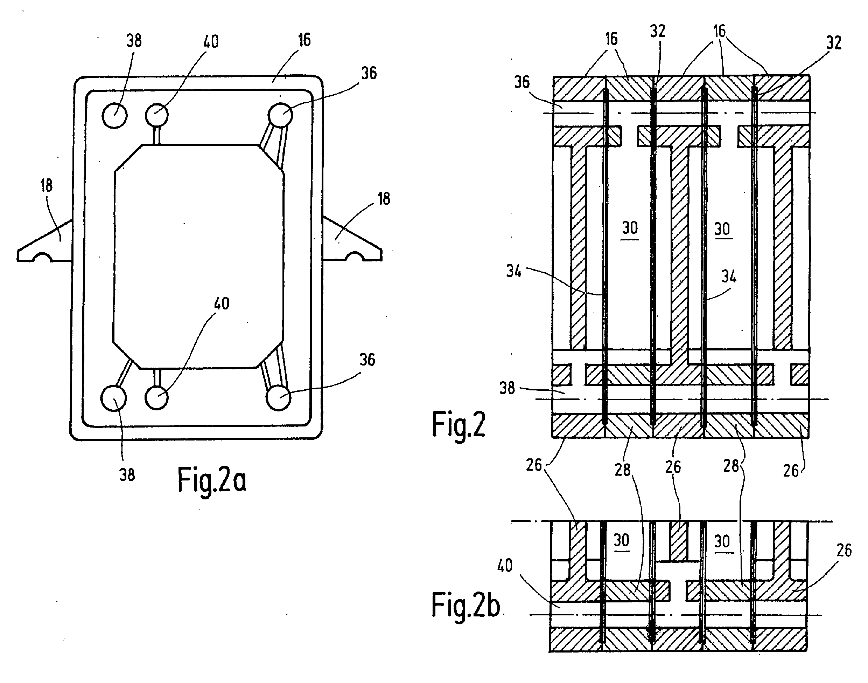

Bei der Ausführungsform nach den Fig.2,2a und 2b bilden in alternierender Reihenfolge die Rahmenteile 16 einmal Filtratplatten 26 und einmal Filterrahmen 28 aus, wobei der jeweilige Filterrahmen 28 einen Filtratraum 30 zur Aufnahme eines sich während der Filtration bildenden, nicht näher dargestellten Filterkuchens begrenzt. Der dahingehende Unfiltratraum 30 ist auf seiner einen Seite von einem Schichtfilter 32 abgeschlossen und weist auf seiner dem Schichtfilter 32 gegenüberliegenden Seite als weitere Begrenzung ein weiteres Filtermedium 34 auf, das bei dem vorliegenden Ausführungsbeispiel gleichfalls ein Schichtfilter ist. Als Filtermedium des jeweiligen Schichtfilters 32,34 kommt eine Tiefenfilterschicht zum Einsatz, wie sie durch den Stand der Technik vorgegeben ist.

Eine dahingehende Tiefenfilterschicht ist beispielsweise in der DE 100 44 218 A1 offenbart. Bei dieser bekannten Lösung handelt es sich um einen naßfest ausgerüsteten Filter, insbesondere mit hoher Quellfähigkeit, der eine Cellulosefaser enthaltende, offenporige Hohlräume aufweisende Filtermatrix umfaßt, wobei die Cellulosefasern an ihrer Oberfläche chemisch gebundenes Polyisocyanat aufweisen. In einer bevorzugten Ausführungsform weist die bekannte Filtermatrix in ihren Hohlräumen feinverteilte Mikropartikel auf, um dergestalt Feinstabscheideprozesse zu ermöglichen. Aufgrund des nativen Faseraufbaus der Fasermatrix mit Cellulosefasern kann es bei dieser bekannten Lösung jedoch zu Schrumpfvorgängen beim anschließenden Trocknen oder Sintern der Matrix kommen mit der Folge, dass trotz der verstärkten Quellverhaltens eine technisch exakte Vorgabe der Filtrationseigenschaften nicht möglich ist.

Demgegenüber ist in der DE 102 29 291 ein verbessertes Filtermaterial vorgeschlagen in Form einer Tiefenfilterschicht, bestehend aus einer Durchlässe bildenden Stützschicht, mit einer ersten Art an Kunststoff-Fasern und mit einem vorgebbaren Anteil an nativen Fasern, wobei die erste Art an Fasern als Bikomponentenfasern ausgebildet ist; die einen Kern aufweisen mit einem hohen Schmelzpunkt, der von einem Mantel mit einem demgegenüber niedrigeren Schmelzpunkt umgeben ist, wobei im Filtermaterial ein Naßfestmittel vorhanden ist, ausgewählt aus der Gruppe der Epichlorhydrin-Harze und/oder Melaminformaldehyd-Harze. Hierdurch ist eine im wesentlichen schrumpffreie, stabile Filtermatrix aufgebaut mit verläßlichen Verbindungsstellen, mit der konstante Filtrationseigenschaften erreichbar sind sowie Feinstabscheideprozesse, um dergestalt Kleinstteile, wie Mikroorganismen oder Proteine sowie Eiweißstoffe aus Fluidlösungen abtrennen zu können. Die vorstehend bezeichneten Tiefenfilterschichten sind mithin besonders geeignet für die vorliegende Filtervorrichtung.
Die vorliegende Lösung ist des weiteren dadurch charakterisiert, dass die Filtermedien 32,34 sich tuchartig mit im wesentlichen quadratischem Querschnitt über die Rahmenteile 16 erstrecken und sich dergestalt zwischen zwei Rahmenteilen 16 pressend festlegen lassen.

Bei dem in der Fig.2 gezeigten Ausführungsbeispiel wird das Unfiltrat über die Eingangskanäle 36 den einzelnen Rahmenteilen 16 in Stapelfolge zugeführt (vgl. auch Fig.2a). Das dahingehende Unfiltrat strömt dann über die Eingangskanäle 36 in den Unfiltratraum 30 und passiert dort beidseitig jeweils den Schichtfilter 32 sowie den Schichtfilter 34. Die Abfuhr des Filtrats erfolgt dann über die in einer horizontalen Ebene hintereinander angeordneten Ausgangskanäle 38,40, wobei der weitere Ausgangskanal 40 in einer anderen Schnittebene zu der Fig.2 in der Fig.2b dargestellt ist. Wie sich des weiteren aus der Fig.2a ergibt, ist die Anordnung an Ausgangskanälen 38,40 zweifach vorhanden, nämlich oben und unten verlaufend an den Rahmenteilen 16 sowie im wesentlichen in einer horizontalen Ebene verlaufend zu den Eingangskanälen 36 für das Unfiltrat. Hat sich nun im jeweiligen Unfiltratraum 30 hinreichend ein Filterkuchen aufgebaut, verfügt dieser noch über entsprechende, nicht ausfiltrierte Inhaltsstoffe und um diese zu gewinnen, ist ein Auswaschen des Filterkuchens im Filtratraum 30 vorgesehen. Hierfür wird eine nicht näher dargestellte Waschflüssigkeit eingangsseitig über den Filtratausgang 38 zugeführt und nach Passieren der Filtratplatten 26, dem Filtermedium 34, dem Filtratkuchen im Unfiltratraum 30 und dem Schichtfilter 32 gelangt die Waschflüssigkeit mit den durch die Waschung erhaltenen Wirksubstanzen in den in Blickrichtung auf die Fig.2 gesehen mittleren Filtratplattenteil 26 und von dort aus erfolgt die Abfuhr über den Ausgangskanal 40. Bei dem dahingehenden Vorgang wird durch die spezifische Anordnung eine flächen-gleichmäßige schonende Filterkuchenwaschung ermöglicht. Des weiteren ist mit der dahingehenden Ausgestaltung ein besonders schonender Wirkstofferhalt erreichbar, der ohne weitere Druckmedien auskommt, so dass insbesondere bei Feinststoffen, die empfindlich gegenüber mechanischer Belastung reagieren, sich die Ausgestaltung des Filterpaketes nach der Fig.2 anbietet.

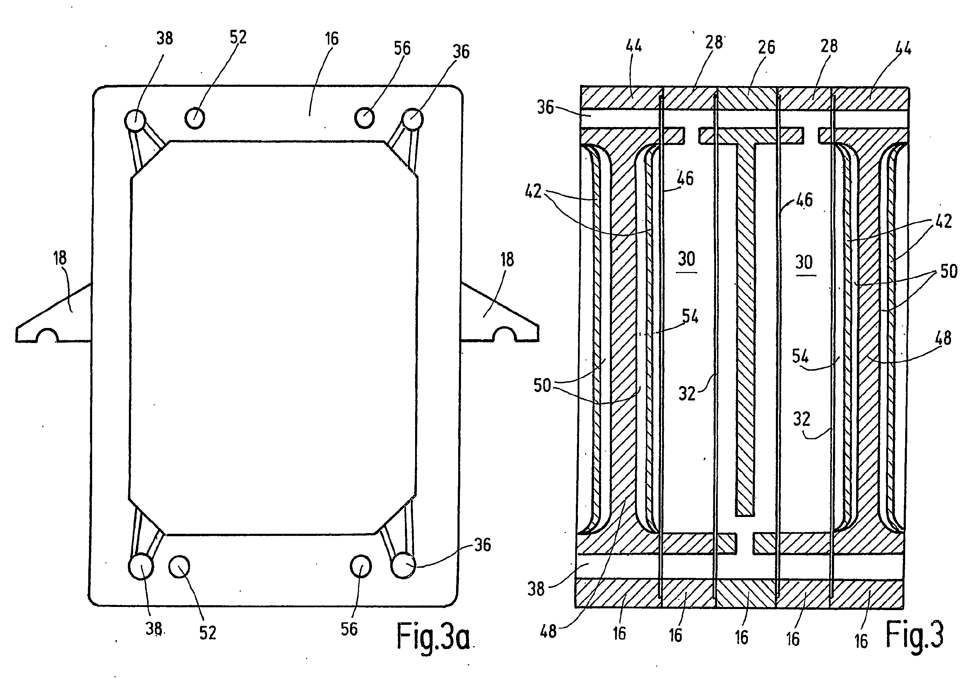

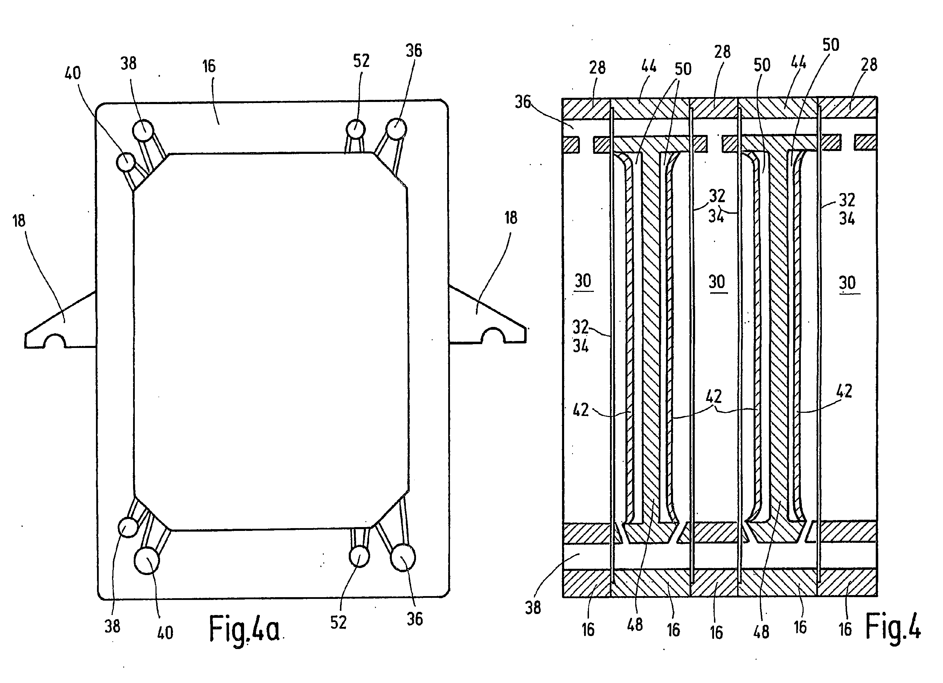

Die nachfolgenden Ausführungsbeispiele nach den Fig.3 und 4 werden im folgenden nur noch insoweit beschrieben, als sie sich wesentlich von dem vorangegangenen Ausführungsbeispiel unterscheiden.
Des weiteren werden dieselben Baukomponenten mit denselben Bezugszeichen versehen und das bisher hierzu Ausgeführte gilt dann auch insoweit für die weiteren Ausführungsformen.

Insbesondere unterscheiden sich die beiden weiteren Ausführungsbeispiele nach den Fig.3 und 4 von der Ausführungsform nach der Fig.2 dadurch, dass diese zur Filterkuchenpressung ein Druckmedium, insbesondere in Form eines Druckgases, einsetzen, das auf eine Membran 42 einer Membranplatte 44 einwirkt, die als weiteres Rahmenteil 16 im Stapel zu den sonstigen Rahmenteilen in alternierender Reihenfolge gemäß Ausgestaltung nach der Fig.2 mit hinzutritt.

Bei der Ausführungsform nach der Fig.3 wird wiederum zur randseitigen Begrenzung des Filtratraumes 30 in Blickrichtung auf die Fig.3 gesehen rechts jeweils ein Tiefenfiltermedium als Schichtfilter 32 eingesetzt. Auf der gegenüberliegenden Seite begrenzt diesmal als weiteres Filtermedium ein Filtertuch 46 üblichen Aufbaues den Unfiltratraum 30. Wie des weiteren die Fig.3 zeigt, weist entlang einer Mittelebene die jeweilige Membranplatte 44 zwei von einer Kammerwand 48 separierte Membranen 42 auf. Zwischen Kammerwand 48 und der jeweils benachbart gegenüberliegenden Membran ist ein Druckraum 50 gebildet, wobei durch Zu- und Ableitung einer Druckflüssigkeit über die Druckkanäle 52 (vgl. Fig.3a) die jeweilige Membran 42, beispielsweise in Form einer gummielastischen Membran, in Richtung der benachbart gegenüberliegenden Filtertuchwand 46 gepreßt wird, wobei das jeweilige Filtertuch 46 mit einer vorgebbaren Fluiddurchlässigkeit ausgestattet ist. Des weiteren begrenzt die jeweilige Membran 42 mit dem ihr zuordenbaren Filtertuch 46 eine Waschkammer 54, die über weitere Kanäle 56 (vgl. Fig.3a) mit vorgebbarer Waschflüssigkeit beschickt werden kann.

Bei der dahingehenden Lösung wird wiederum Unfiltrat (Suspension) über die beiden Kanäle 36 der Vorrichtung zugeführt und in den Unfiltratraum 30 verbracht und vom Feststoff getrennt. Anschließend durchströmt das Fluid vom Unfiltratraum 30 kommend die Tiefenfilterschicht 32 und wird dann mittels der jeweiligen Filtratplatte 26 gesammelt und durch die beiden Filtratkanäle 38 abgeleitet. Nach der Filtration kann der sich im Unfiltratraum 30 des Filterrahmens 28 gesammelte Feststoff mit Hilfe der Membranen 42 ausgepreßt werden, sofern ein Druckmedium über die Druckkanäle 52 der Vorrichtung zugeführt wird. Anschließend wird der Filterkuchen im Unfiltratraum 30 im gepreßten Zustand gewaschen, wozu die Waschflüssigkeit über die beiden weiteren Kanäle 56 (vgl. Fig.3a) der Vorrichtung zugeführt wird. Die dahingehende Waschflüssigkeit wird dann über den Freiraum bzw. die Waschkammer 54 zwischen der jeweiligen Preßmembran 42 und dem Filtertuch 46 als weiteres Filtermedium verteilt und flächengleich durch den Filterkuchen im Unfiltratraum 30 gedrückt. Anschließend durchtritt die Waschflüssigkeit die Tiefenfilterschicht in Form des Schichtfilters 32, wird in der Filtratplatte 26 gesammelt und über die Filtratkanäle 38 dann abgeleitet. Da bei allen diesen Abläufen keine Verformung der Tiefenfilterschicht 32 erforderlich ist, ist eine sichere und optimale Filtration und Kuchenwaschung mit der Vorrichtung gewährleistet.

Bei der Ausführungsform nach den Fig.4, 4a werden dem Grunde nach die Filtratplatten 26 als Membranplatten 44 ausgeführt und des weiteren ist als Filtermedium vorzugsweise ein elastisch aufgebauter Schichtfilter 32 oder ein Filtertuch 34 als weiteres Filtermedium vorgesehen. Das Unfiltrat wird wiederum über den Eingangskanal 36 von oben und unten her dem jeweiligen Rahmenteil 16 zugeführt und die Abfuhr an Filtrat erfolgt über die Ausgangskanäle 38,40 gleichfalls oben und unten am jeweiligen Rahmenteil 16. Die Zu- und Ableitung der Druckflüssigkeit erfolgt über die Druckkanäle 52 (vgl. Fig.4a) und das flüssige oder gasförmige Druckmedium gelangt dergestalt in den Druckraum 50 zwischen Kammerwand 48 und Membran 42. Als Eingang für die Waschflüssigkeit steht diesmal der Ausgang 40 an Filtrat zur Verfügung und der Ausgang der Waschflüssigkeit erfolgt über die Ausgangskanäle 38 des weiteren Filtrats. Auf diese Art und Weise besteht alternierend die Möglichkeit, den jeweiligen Feststoffkuchen im Unfiltratraum 30 von der einen oder anderen Seite über die jeweilige Membran 42 gezielt auszupressen und dabei gleichzeitig die Kuchenwaschung vorzunehmen.

Mit den aufgezeigten Lösungen ist eine optimierte Kuchenwaschung für den jeweiligen Feststoffkuchen innerhalb der Vorrichtung erreicht, und zwar einmal ohne und einmal mit mechanischer Druckbeaufschlagung über Druckmembranen. Mit der erfindungsgemäßen Lösung lassen sich auf schonende und wirtschaftliche Art und Weise Feinststoffe, wie Eiweißstoffe, Albumin, Globulin, aus Fluiden herausfiltrieren im Rahmen der Blut-Plasma-Fraktionierung.

Um nach außen hin eine Abdichtung des Filtrationssystems zu gewährleisten, ist zwischen den relevanten Rahmenteilen eine umlaufende, geschlossene Dichtung (nicht dargestellt) in der jeweiligen Einspannebene vorhanden. Ferner kann die dahingehende Dichtung an dem jeweiligen randseitigen Abschluß des Filtermediums einstückig an diesem angeordnet sein.

## Patentansprüche

1. Verfahren zum Filtrieren von Fluiden, wobei ein Eingang (22) für das Unfiltrat und ein Ausgang (24) für das Filtrat sowie eine Mehrzahl an stapelbaren Rahmenteilen (16) vorgesehen werden, in Form von Filtratplatten (26) und von Filterrahmen (28), wobei der jeweilige Filterrahmen (28) einen Unfiltratraum (30) zur Aufnahme eines sich bildenden Filterkuchens begrenzt, der auf seiner einen, dem nächsten Rahmenteil (16) im Stapel zugewandten Seite von einem Schichtfilter (32) abgeschlossen wird, wobei der Unfiltratraum (30) mit dem aufnehmbaren Filterkuchen auf seiner, dem Schichtfilter (32) gegenüberliegenden Seite von einem weiteren Filtermedium (34) begrenzt wird, und wobei durch dieses weitere Filtermedium (34) ein weiteres Fluid in Form einer Waschflüssigkeit zugeführt wird, **dadurch gekennzeichnet, dass** die durch das weitere Filtermedium (34) zugeführte Waschflüssigkeit nach Durchströmen des Filterkuchens und des angrenzenden Schichtfilters (32) die Vorrichtung über ihren Ausgang (24) derart verläßt, dass im Rahmen einer Blutplasma-Fraktionierung Feinststoffe, wie Eiweißstoffe, Albumin, Globulin, aus dem Fluid herausfiltriert werden.

2. Verfahren nach Anspruch 1, **dadurch gekennzeichnet, dass** der Schichtfilter (32) aus einem Tiefenfiltermedium gebildet wird und das weitere Filtermedium (34) aus einem Filtertuch (46) oder gleichfalls aus einem Tiefenfiltermedium gebildet wird.

3. Verfahren nach Anspruch 1 oder 2, **dadurch gekennzeichnet, dass** auf das weitere Filtermedium (34) derart eine Druckkraft ausgeübt wird, dass der Filterkuchen in Richtung des Schichtfilters (32) gepreßt wird.

4. Verfahren nach einem der Ansprüche 1 bis 3, **dadurch gekennzeichnet, dass** zum Ausüben der Druckkraft auf das weitere Filtermedium (34) eine mit einem Druckmedium, insbesondere in Form von Druckgas oder Druckflüssigkeit, beaufschlagbare Membran (42) vorgesehen wird, die Bestandteil einer Membranplatte (44) als weiteres Rahmenteil (16) ist.

5. Verfahren nach einem der Ansprüche 1 bis 4, **dadurch gekennzeichnet, dass** der Schichtfilter (32) und das weitere Filtermedium (34) zwischen die plattenartigen Rahmenteile (16) eingespannt wird und dass diese die Unfiltrat- und Filtratkanäle (36;38,40), die an Eingang (22) bzw. Ausgang (24) angeschlossen sind, unüberdeckt lassen.

6. Verfahren nach Anspruch 5, **dadurch gekennzeichnet, dass** das weitere Medium, insbesondere in Form der Waschflüssigkeit, über die Filtratkanäle (38,40) und/oder über separate Kanäle (56) in den Rahmenteilen (16) zu- und abgeführt wird.

## Claims

1. A method for filtering fluids, an inlet (22) for the unfiltrate, an outlet (24) for the filtrate and a plurality of stackable frame parts (16) being provided, in the form of filtrate plates (26) and filter frames (28), the respective filter frame (28) defining an unfiltrate space (30) for accommodating a self-forming filter cake which, on its one side facing towards the next frame part (16) in the stack, is sealed off by a layer filter (32), the unfiltrate space (30) with the accommodatable filter cake being defined by a further filter medium (34) on its side lying opposite the layer filter (32), and by means of this further filter medium (34) a further fluid being delivered in the form of a washing liquid, **characterised in that** the washing liquid delivered by the further filter medium (34) leaves the device via its outlet (24) after flowing through the filter cake and the adjacent layer filter (32) such that within the framework of blood plasma fractionation fine materials such as proteins, albumin and globulin are filtered out of the fluid.

2. The method according to Claim 1, **characterised in that** the layer filter (32) is formed from a depth filter medium, and the further filter medium (34) is formed from a filter cloth (46) or likewise from a depth filter medium.

3. The method according to Claim 1 or 2, **characterised in that** a compressive force is exerted upon the further filter medium (34) such that the filter cake is pressed towards the layer filter (32).

4. The method according to any of Claims 1 to 3, **characterised in that** in order to exert the compressive force upon the further filter medium (34) a membrane (42) which can be subjected to a pressure medium, in particular in the form of pressure gas or pressure fluid, is provided which is a component of a membrane plate (44) as a further frame part (16).

5. The method according to any of Claims 1 to 4, **characterised in that** the layer filter (32) and the further filter medium (34) are clamped between the plate-like frame parts (16) and that the latter leave the unfiltrate and filtrate channels (36;38,40), which are connected to the inlet (22) or the outlet (24), uncovered.

6. The method according to Claim 5, **characterised in that** the further medium, in particular in the form of the washing liquid, is delivered and discharged via the filtrate channels (38,40) and/or via separate channels (56) in the frame parts (16).

## Revendications

1. Procédé de filtration de fluides, dans lequel on prévoit une entrée (22) pour le non filtrat et une sortie (24) pour le filtrat, ainsi qu'une pluralité de parties (16) de cadre pouvant être empilées sous la forme de plaques (26) de filtrat et de cadres (28) de filtre, dans lequel le cadre (28) de filtre respectif délimite un espace de non filtrat pour la réception d'un gâteau de filtre qui se forme, qui est fermé sur son côté tourné vers la partie (16) de cadre voisine de la pile par un filtre (32) à couche, dans lequel l'espace (30) pour le non filtrat ayant le gâteau de filtre qu'il peut recevoir est délimité, sur son côté opposé au filtre (32) à couche, par un autre milieu (34) filtrant, et dans lequel on envoie sous la forme d'un liquide de lavage un autre fluide à travers cet autre milieu (34) filtrant, **caractérisé en ce que** le liquide de lavage envoyé à travers cet autre milieu (34) filtrant quitte, après avoir traversé le gâteau de filtre et le filtre (32) à couche voisin, le dispositif par sa sortie (34) de manière à ce que, dans le cas d'un fractionnement du plasma sanguin, des substances fines, comme des substances albuminiques, de l'albumine, de la globuline soient éliminées du fluide par filtration.

2. Procédé suivant la revendication 1, **caractérisé en ce que** le filtre (32) à couche est formé d'un milieu filtrant à lit profond et **en ce que** l'autre milieu (34) filtrant est formé d'un tissu (46) filtrant ou également d'un milieu filtrant à lit profond.

3. Procédé suivant la revendication 1 ou 2, **caractérisé en ce que** l'on applique sur l'autre milieu (34) filtrant une force de pression de manière à presser le gâteau de filtre en direction du filtre (32) à couche.

4. Procédé suivant l'une des revendications 1 à 3, **caractérisée en ce que,** pour appliquer la force de pression sur l'autre milieu (34) filtrant, on prévoit une membrane (32) pouvant être soumise à l'action d'un fluide de pression, notamment sous la forme d'un gaz de pression ou d'un liquide de pression, cette membrane faisant, en tant qu'autre partie (16) du cadre, partie d'une plaque (44) à membrane.

5. Procédé suivant l'une des revendications 1 à 4, **caractérisé en ce que** le filtre (32) à couche et l'autre milieu (34) filtrant sont tendus entre les parties (16) de cadre de type à plaque et **en ce que** celles-ci laissent découvert les canaux (36 ; 38 ; 40) pour le non filtrat et pour le filtrat, qui sont raccordés à l'entrée (22) et à la sortie (24).

6. Procédé suivant la revendication 5, **caractérisé en ce que** l'autre milieu, notamment sous la forme de liquide de lavage, est apporté par les canaux (38 ; 40) pour le filtrat et/ou par des canaux (56) distincts dans les parties (16) de cadre et en est évacué.
